# EUROPÄISCHE PATENTSCHRIFT

(11) **EP 2 956 370 B1**
(45) Veröffentlichungstag und Bekanntmachung des Hinweises auf die Patenterteilung: **15.09.2021**
(21) Anmeldenummer: 14701004.5
(22) Anmeldetag: 16.01.2014
(51) Int. Cl.: B65C 9/18, B65C 9/44

(54) **VERFAHREN ZUM AUSRICHTEN EINES ETIKETTENSTREIFENS**
METHOD FOR ALIGNING A STRIP OF LABELS
PROCÉDÉ PERMETTANT D'ORIENTER UNE BANDE D'ÉTIQUETTES

(30) Priorität: 14.02.2013 DE 102013202425
(43) Veröffentlichungstag der Anmeldung: 23.12.2015
(73) Patentinhaber: Krones AG, 93073 Neutraubling (DE)
(72) Erfinder: PÜSCHNER, Armin, 93073 Neutraubling (DE); WEISS, Markus, 93073 Neutraubling (DE)
(74) Vertreter: Grünecker Patent- und Rechtsanwälte PartG mbB
(86) Internationale Anmeldenummer: PCT/EP2014/050777
(87) Internationale Veröffentlichungsnummer: WO 2014/124775

(56) Entgegenhaltungen:
- EP-A2- 2 364 918
- WO-A2-2010/103441
- DE-U1-202005 020 478
- JP-A- 2007 076 671
- US-A- 6 112 658
- None

## Beschreibung

Die Erfindung betrifft ein Verfahren zum Ausrichten eines Etikettenstreifens, und eine Etikettiermaschine zum Etikettieren von Behältern mit den Merkmalen des Oberbegriffs von Patentanspruch 8.

In Etikettiermaschinen werden Etiketten auf Behältern angebracht. Hierbei wird von einer Vorratsrolle ein ungeschnittener Etikettenstreifen abgerollt und mittels einer Transportvorrichtung mit mehreren Rollen einer Schneideinrichtung zugeführt. In der Schneideinrichtung wird dann der Etikettenstreifen mit einer Vakuumrolle aufgenommen und mit einem Messer in einzelne Etiketten zerschnitten. Die vereinzelten Etiketten werden von einem Greifmechanismus von der Vakuumrolle abgenommen, an einer Beleimungsstation mit Leim versehen und auf Behältern aufgebracht.

Für eine genaue Schnittposition in der Schneideinrichtung ist der Etikettenstreifen üblicherweise mit Schnittmarken versehen, die als stark kontrastierter Farbbalken auf dem Etikettenstreifen ausgeführt sind. Der Etikettenstreifen wird in der Schneideinrichtung mit hoher Geschwindigkeit an einem Positionssensor vorbeigeführt, der die Schnittmarken mit einer hohen zeitlichen Auflösung erkennt und der dann ein Signal an die Steuerung der Schneideinrichtung abgibt. Durch dieses Signal wird das Messer in Bezug auf die Lage des Etikettenstreifens so gesteuert, dass er an den gewünschten Schnittpositionen in einzelne Etiketten zerschnitten wird.

Darüber hinaus ist aus der EP 2 364 918 A2 ein Verfahren bekannt, das ohne die oben genannten Schnittmarken auskommt. Bei diesem Verfahren werden mit einer Bilderfassungseinrichtung zweidimensionale Bilder des Etikettenstreifens aufgenommen und über eine Erkennung des Etikettenaufdrucks wird dann ein Taktsignal für die Schneideinrichtung generiert.

Nachteilig beim genannten Stand der Technik ist, dass das bekannte Verfahren beim Einlernen und Ausrichten eines Etikettenstreifens fehleranfällig ist und lange dauert, da eine Bedienperson eine Reihe von dafür nötigen Funktionen manuell ausführen muss, wie beispielsweise den Vorschub des Etikettenstreifens oder das Vakuum in der Schneideinrichtung.

Die JP 2007-076671 A offenbart die Merkmale des Oberbegriffs des Anspruchs 8. Sie beschreibt ein System zum Anbringen von Etiketten auf Behältern, wobei ein Etikettensubstrat mittels einer stehenden und einer rotierenden Klinge zu Etiketten vereinzelt wird. Die rotierende Klinge wird mit einem Sensor gesteuert, der Marken auf dem Etikettensubstrat erkennt. Bei der Kalibrierung des Systems bestimmt der Bediener die Etikettenlänge und die Position des Sensors zu den Marken im Moment des Zerschneidens. Diese Werte werden dann manuell in die Maschinensteuerung eingetragen.

Die WO 2010/103441 A2 offenbart eine Vorrichtung, mit der ein Band zu Etiketten zerschnitten wird. Zur Steuerung des Bandvorschubs wird ein auf dem Band aufgedrucktes Bild erkannt und mit einem Referenzbild verglichen.

Aufgabe der vorliegenden Erfindung ist es, ein Verfahren zum Ausrichten eines Etikettenstreifens bereitzustellen, das weniger fehleranfällig und schneller durchzuführen ist.

Zur Lösung der Aufgabestellung stellt die Erfindung ein Verfahren zum Ausrichten eines Etikettenstreifens mit den Merkmalen des Anspruchs 1 sowie eine Etikettiereinrichtung gemäß dem Anspruch 8 bereit. Vorteilhafte Ausführungsformen der Erfindung sind in den Unteransprüchen genannt.

Dadurch, dass in einem Lernmodus der Etikettenstreifen mit einer Transporteinrichtung automatisch transportiert wird, kann der als erste Kamera ausgebildete Positionssensor den Etikettenstreifen entlang der Transportrichtung automatisch erfassen. Hierdurch kann in einem Kamerabild ein Bereich des Etikettenstreifens mit mehreren sequenziell nacheinander angeordneten Etiketten erfasst werden. Auch kann über den bekannten Abstand des Positionssensors zu der Schneideinrichtung ein fester Bezug hergestellt und die Lage des Etikettenstreifens gegenüber der Schneideinrichtung bestimmt werden.

Dadurch, dass die Bedienperson die Soll-Schnittvorgabe mit der Eingabeeinheit in die Maschinensteuerung eingeben kann und diese gegenüber dem Etikettenstreifen auf dem Bildschirm angezeigt wird, kann nun die Bedienperson die Soll-Schnittvorgabe für die Schneideinrichtung so eingeben, dass diese an der gewünschten Position, wie beispielsweise an der Grenze zwischen zwei Etiketten zu liegen kommt. Da bereits die Lage des Etikettenstreifens gegenüber der Schneideinrichtung aus dem Lernmodus bekannt ist, kann unter dieser Kenntnis die Soll-Schnittvorgabe zur Steuerung der Schneideinrichtung herangezogen werden. Anders ausgedrückt ist auf dem Bildschirmbild eine feste Korrelation zwischen dem Bild des Etikettenstreifens und der Soll-Schnittvorgabe gegeben und eine Bedienperson kann diese entsprechend gegenüber dem Bild des Etikettenstreifens so verschieben, dass die gewünschte Schnittposition zur Vereinzelung der Etiketten eingegeben werden kann.

Bei dem erfindungsgemäßen Verfahren erfolgen die Funktionen innerhalb des Lernmodus automatisch und im Ausrichtungsmodus wird nur die Angabe der Soll-Schnittvorgabe durch die Bedienperson benötigt. Dadurch ergibt sich eine besonders einfache Ausrichtung des Etikettenstreifens, wie beispielsweise beim Wechsel auf einen neuen Etikettentypen.

Das Verfahren kann für eine Etikettiermaschine vorgesehen sein. Die Etikettiermaschine kann zur Etikettierung von Behältern mit Etiketten ausgebildet sein, insbesondere wobei die Behälter Kunststoffflaschen, Glasflaschen, Dosen und/oder Tuben sind. Die Behälter können für Getränke, Lebensmittel, Hygieneartikel, Pasten, chemische, biologische und/oder pharmazeutische Produkte vorgesehen sein. Bei den Etiketten kann es sich insbesondere um Etiketten handeln, die mit einem Haftmittel aufgebracht werden. Die Etiketten können insbesondere Zuschnitte aus Papier oder Kunststoff sein, die insbesondere einen Aufdruck umfassen, der den Inhalt des Behälters bezeichnet, beschreibt und/oder bewirbt. Die Etiketten können sequentiell nacheinander auf dem Etikettenstreifen angeordnet sein. Der Etikettenstreifen kann ein Band oder ein Schlauch sein.

Die Schneideinrichtung kann wenigstens ein messerartiges Werkzeug zum Zerschneiden des Etikettenstreifens umfassen. Die Schneideinrichtung kann eine Vakuumrolle umfassen, mit der der Etikettenstreifen vor und nach dem Zerschneiden transportiert und/oder fixiert wird.

Die Transporteinrichtung kann mit einer Vielzahl von Umlenkrollen und/oder Antriebsrollen ausgebildet sein, um den Etikettenstreifen zu transportieren. Die Transporteinrichtung kann zur Steuerung mit der Maschinensteuerung verbunden sein.

Die erste Kamera ist dazu ausgebildet, einen Bereich des Etikettenstreifens zu erfassen, auf dem in Transportrichtung mehrere Etiketten angeordnet sind. In dem Positionssensor oder der Maschinensteuerung können Parameter gespeichert sein, mit denen die Lage des Etikettenstreifens in Bezug auf die Schneideinrichtung berechnet werden können. Ein Parameter kann insbesondere ein Abstand zwischen dem Positionssensor und der Schneideinrichtung sein.

Der Lernmodus kann mit einer Taste oder der Eingabeeinheit aktiviert werden. Darüber hinaus können der Positionssensor und/oder die Maschinensteuerung dazu ausgebildet sein, ein neues Etikett zu erkennen, wobei insbesondere bei einem neuen Etikettentypen der Lernmodus automatisch aktiviert wird. Mit dem Lernmodus kann ein neuer Etikettentyp für den Positionssensor und/oder die Maschinensteuerung eingelernt werden. Neuer Etikettentyp kann bedeuten, dass die für die Steuerung der Etikettiermaschine für diesen Etikettentypen notwendigen Betriebsparameter noch nicht in der Steuerung gespeichert sind.

Die Eingabeeinheit kann als Tastatur, Pfeiltasten und/oder als Touchscreen ausgebildet sein. Die Eingabeeinheit ist mit der Maschinensteuerung verbunden.

Der Bildschirm kann berührungsempfindlich als Eingabeeinheit ausgebildet sein. Der Bildschirm ist mit der Maschinensteuerung verbunden. Der Bildschirm ist dazu ausgebildet, den Etikettenstreifen und die Soll-Schnittvorgabe grafisch darzustellen.

Soll-Schnittvorgabe bedeutet, dass dies eine Parametervorgabe durch die Bedienperson für die Schneideinrichtung ist, mit der die gewünschte Schnittposition in Bezug auf den Etikettenstreifen angegeben wird.

Die Maschinensteuerung ist zur Steuerung der Schneideinrichtung ausgebildet, insbesondere auch zur automatischen Steuerung der Transporteinrichtung beim Ausrichten des Etikettenstreifens. Die Maschinensteuerung kann dazu ausgebildet sein, über einen Arbeitstakt den Schneidezeitpunkt der Schneideinrichtung zu steuern. Die Maschinensteuerung kann wenigstens eine Motorregelung zur Regelung der Transporteinrichtung und/oder der Schneideinrichtung umfassen. Die Maschinensteuerung kann in mehrere Steuerungs- und/oder Erfassungsmodule untergliedert sein, die entsprechend der Transporteinrichtung bzw. der Schneideinrichtung zugeordnet sind. Die Steuerungs- und/oder Erfassungsmodule können über einen Datenbus miteinander verbunden sein. Ein Steuerungs- und/oder Erfassungsmodul der Maschinensteuerung kann im Positionssensor angeordnet sein.

Bei dem Verfahren kann die Soll-Schnittvorgabe in einer Datenbank gespeichert werden. Dadurch kann die Soll-Schnittvorgabe bei einer späteren Verwendung des gleichen Etikettentyps aus der Datenbank wieder abgerufen werden. Die Soll-Schnittvorgabe kann zusammen mit wenigstens einem Identifizierungsmerkmal des Etikettentyps in der Datenbank abgespeichert sein. Die Datenbank kann mit der Maschinensteuerung verbunden sein.

Bei dem Verfahren werden die Kamerabilder des Positionssensors mit einer ersten Bildverarbeitungseinheit ausgewertet. Hierdurch können automatisch Merkmale aus dem Kamerabild des Etikettenstreifens identifiziert werden. Beispielsweise können Barcodes, Bedruckungsränder, Text, charakteristische Kurvenverläufe und Ecken mit der Bildverarbeitungseinheit automatische erkannt werden. Hierdurch kann die Bedienperson durch ein Markieren von charakteristischen Merkmalen am Bildschirm bei der Positionierung der Soll-Schnittvorgabe unterstützt werden. Darüber hinaus können mit der Bildverarbeitungseinheit Identifikationsmerkmale des Etikettentyps ausgewertet und erkannt werden. Die erste Bildverarbeitungseinheit kann in der Maschinensteuerung und/oder der ersten Kamera angeordnet sein.

Bei dem erfindungsgemäßen Verfahren erkennt im Lernmodus die erste Bildverarbeitungseinheit eine Ist-Schnittvorgabe automatisch und markiert sie auf dem Bildschirm gegenüber dem Etikettenstreifen. Hierdurch kann die Ist-Schnittvorgabe am Bildschirm als Vorschlag für eine Soll-Schnittvorgabe angezeigt werden. Dadurch kann die Bedienperson die Soll-Schnittvorgabe schneller eingeben, wodurch das Einrichten eines neuen Etiketts beschleunigt wird. Ist-Schnittvorgabe bedeutet, dass dies eine von der ersten Bildverarbeitungseinheit automatisch ermittelte Parametervorgabe für die Schneideinrichtung ist, mittels der der Bedienperson eine Schnittposition in Bezug auf den Etikettenstreifen vorgeschlagen wird.

Die Ist-Schnittvorgabe kann bei dem Verfahren in einer Datenbank gespeichert werden. Hierdurch ist eine spätere Analyse der Leistungsfähigkeit der ersten Bildverarbeitungseinheit möglich und es können dadurch Kriterien zur Verbesserung der ersten Bildverarbeitungseinheit abgeleitet werden. Die Datenbank kann die gleiche sein wie die zuvor beschriebene Datenbank zur Speicherung der Soll-Schnittvorgabe.

Bei dem Verfahren kann in einem Qualitätssicherungsmodus eine als zweite Kamera ausgebildete Qualitätssicherungseinheit den geschnittenen Etikettenstreifen erfassen. Hierdurch ist es möglich, dass die Bedienperson das Kamerabild der zweiten Kamera betrachtet und die tatsächliche Schnittposition prüft. Schnittposition kann bedeuten, dass dies die tatsächliche Position ist, an der der Etikettenstreifen von der Schneideinheit zerschnitten wurde. Bei einer nicht korrekten Schnittposition kann dann die Bedienperson die Soll-Schnittvorgabe so lange korrigieren, bis die Schnittposition korrekt ist. Die Bedienperson kann die Schnittposition mithilfe der Eingabeeinheit und dem am Bildschirm angezeigten Etikettenstreifen zur Auswertung markieren. Die erste Kamera und die zweite Kamera können eine einzige Kamera oder zwei verschiedene Kameras sein.

Bei dem Verfahren kann die Qualitätssicherungseinheit eine Schnittposition am geschnittenen Etikettenstreifen mithilfe einer zweiten Bildverarbeitungseinheit automatisch erkennen und auf dem Bildschirm gegenüber dem geschnittenen Etikettenstreifen darstellen. Hierdurch wird die Qualitätssicherungseinheit automatisiert und die Bedienperson benötigt besonders wenig Zeit, um die Soll-Schnittvorgabe ggf. zu korrigieren. Die erste Bildverarbeitungseinheit und die zweite Bildverarbeitungseinheit können eine einzige Bildverarbeitungseinheit oder zwei verschiedene Bildverarbeitungseinheiten sein. Die zweite Bildverarbeitungseinheit kann in der Maschinensteuerung und/oder der zweiten Kamera angeordnet sein.

Bei dem Verfahren kann dann in einem Korrekturmodus die Maschinensteuerung eine Abweichung der Soll-Schnittvorgabe von der Schnittposition automatisch korrigieren. Hierdurch wird die Korrektur der Soll-Schnittvorgabe automatisiert und benötigt keinen Eingriff durch die Bedienperson. Durch die Abweichung kann der Abstand zwischen dem Positionssensor und der Schneideinrichtung kalibriert werden. Ebenso kann die Schneideinrichtung durch die Abweichung bezüglich der Schnittposition kalibriert werden.

Bei dem Verfahren kann die Schnittposition in einer Datenbank gespeichert werden. Dadurch kann die tatsächliche Schnittposition zu einem späteren Zeitpunkt aus der Datenbank wieder abgerufen werden und das System kann ohne erneute Kalibrierung auskommen.

Darüber hinaus stellt die Erfindung eine Etikettiermaschine zum Etikettieren von Behältern mit den Merkmalen des Anspruchs 8 bereit. Vorteilhafte Ausführungsformen der Erfindung sind in den Unteransprüchen genannt.

Dadurch, dass die Eingabeeinheit zur Eingabe und möglicherweise auch zur Korrektur einer Soll-Schnittvorgabe ausgebildet ist und diese am Bildschirm gegenüber dem Etikettenstreifen angezeigt werden kann, ist es für die Bedienperson möglich, die Soll-Schnittvorgabe in Bezug auf den Etikettenstreifen an der gewünschten Stelle in einfacher Weise vorzugeben. Dadurch, dass die Schnittposition der Schneideinrichtung durch die Maschinensteuerung auf Basis der Soll-Schnittvorgabe steuerbar ist, wird automatisch die Schneideinrichtung so gesteuert, dass der Schnitt an der gewünschten Soll-Schnittvorgabe erfolgt. Hierdurch kann eine Bedienperson die Etikettiermaschine besonders einfach und schnell auf das Etikettieren mit einem neuen Etikettentyp einrichten.

Die Etikettiermaschine weist gemäß der vorliegenden Erfindung die Merkmale des Anspruchs 8 auf.

Die Etikettiermaschine umfasst somit eine erste Bildverarbeitungseinheit zur Auswertung der Lage des Etikettenstreifens aus einem Kamerabild des Positionssensors. Hierdurch können die Lage des Etikettenstreifens und/oder charakteristische Merkmale des Etikettenstreifens automatisch ausgewertet werden. Durch die Anzeige derartiger Informationen kann die Bedienperson bei der Wahl der Soll-Schnittvorgabe besonders gut unterstützt werden.

Die erste Bildverarbeitungseinheit kann zur Erkennung von transformationsinvarianten Merkmalen der Etikette ausgebildet sein. Transformationsinvariante Merkmale können Druckmerkmale sein, die sich unabhängig von einer Verschiebung des Etikettenstreifens gegenüber dem Positionssensor mithilfe der ersten Bildverarbeitungseinheit identifizieren lassen. Beispielsweise können dies Ränder, Barcodes, Kanten, Ecken, Kreise und/oder Mittelpunkte von Kreisen sein.

Die erste Bildverarbeitungseinheit kann zum Vergleich des Kamerabildes mit einem Referenzbild ausgebildet sein. Hierdurch kann die Lage des Etikettenstreifens besonders einfach bestimmt werden. Die erste Bildverarbeitungseinheit kann beim Vergleich des Kamerabildes mit dem Referenzbild zur Berechnung einer Transformation zwischen beiden Bildern ausgebildet sein. Vergleich kann bedeuten, dass eine Verschiebung zwischen dem Kamerabild und dem Referenzbild mit der ersten Bildverarbeitungseinheit bestimmbar ist.

Die Etikettiermaschine kann weiter eine Qualitätssicherungseinheit zur Erfassung des geschnittenen Etikettenstreifens umfassen. Hierdurch kann die Qualität des Schnitts und/oder die Schnittposition durch die Schneideinheit erfasst und bewertet werden.

Die Qualitätssicherungseinheit kann eine zweite Kamera umfassen, wobei mit einer zweiten Bildverarbeitungseinheit eine Schnittposition aus einem Kamerabild des geschnittenen Etikettenstreifens auswertbar ist. Dadurch kann die Schnittposition nach der Schneideinrichtung automatisch erfasst werden und für eine Korrektur der Soll-Schnittvorgabe herangezogen werden.

Die Etikettiermaschine kann insbesondere für die Durchführung des oben beschriebenen Verfahrens ausgebildet sein.

Weitere Merkmale und Vorteile der Erfindung werden nachfolgend anhand der in den Figuren dargestellten Ausführungsbeispiele erläutert. Dabei zeigt:
- Fig. 1: eine erfindungsgemäße Etikettiermaschine in einer Draufsicht;
- Fig. 2: eine Bildschirmdarstellung des Etikettenstreifens beim Eingeben der Soll-Schnittvorgabe mit einer Eingabeeinheit;
- Fig. 3: eine Bildschirmdarstellung bei einer automatischen Erkennung der Ist-Schnittvorgabe; und
- Fig. 4: eine Bildschirmdarstellung nach der Erkennung der Schnittposition durch eine Qualitätssicherungseinheit.

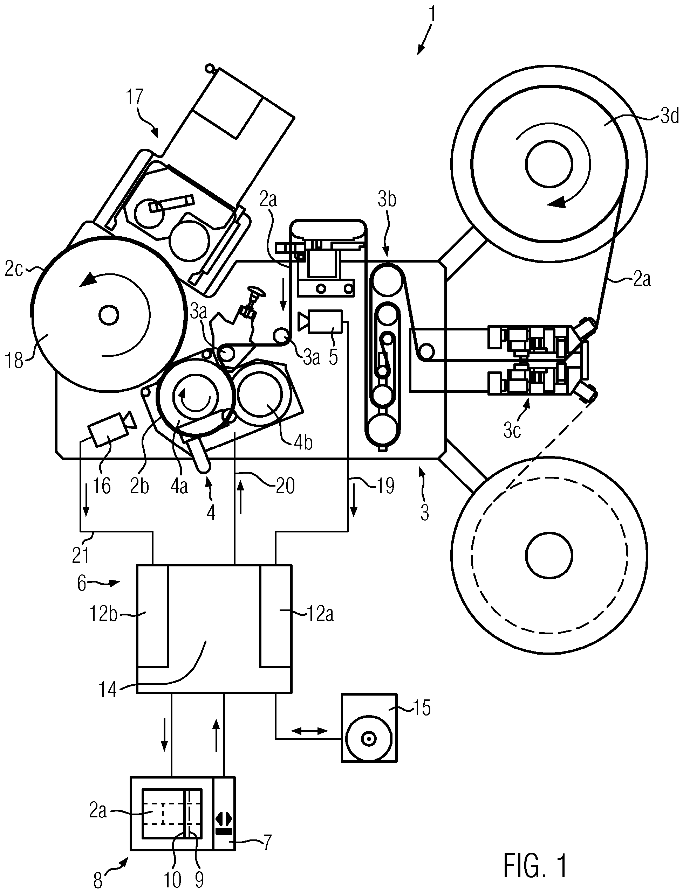

Fig. 1 zeigt eine erfindungsgemäße Etikettiermaschine 1 in einer Draufsicht. Zu sehen ist, dass der Etikettenstreifen 2a durch die Transporteinrichtung 3 durch die verschiedenen Einheiten der Etikettiermaschine 1 geführt wird. Dabei wird der Etikettenstreifen 2a zunächst an dem Positionssensor 5 vorbeigeführt und an der Schneideinrichtung 4 in einzelne Etiketten zerschnitten. Anschließend werden die einzelnen Etiketten 2c an der Beleimungsstation 17 vorbeigeführt und mit der Übergaberolle 18 auf den Behältern angebracht (hier nicht dargestellt).

Die Transporteinrichtung 3 umfasst dabei eine Vorratsrolle 3d, eine Verklebungsstation 3c zur Verklebung des Etikettenstreifens 2a bei einem Wechsel der Vorratsrolle 3d, einen Bandpuffer 3b und mehrere Umlenkrollen 3a. Durch die Transporteinrichtung 3 wird der Etikettenstreifen 2a innerhalb der Etikettiermaschine 1 geführt und weitertransportiert.

Die Schneideinrichtung 4 umfasst eine Vakuumrolle 4a und ein Schneidwerkzeug 4b. Hierbei wird der zunächst ungeschnittene Etikettenstreifen 2a der Schneideinrichtung 4 zugeführt und auf der Vakuumrolle 4a mittels eines Unterdrucks fixiert. Das Schneidwerkzeug 4b weist mehrere vertikal verlaufende Klingen auf, mit denen der Etikettenstreifen 2a in die einzelnen Etiketten 2c zerschnitten werden kann. Die Schneideinrichtung 4 ist dabei so steuerbar ausgebildet, dass die Schnittposition längs der Transportrichtung des Etikettenstreifens 2a veränderbar ist. Hierdurch kann die Schneideinrichtung 4 auf unterschiedliche Etikettenlängen so angepasst werden, dass die Schnittlage an den vorgesehenen Rändern der Etikette 2c verläuft.

Da jedoch die Lage des Etikettenstreifens 2a in Bezug auf die Schneideinrichtung 4 nicht von vornherein bekannt ist, wird mit dem Positionssensor 5 erfasst, der vor der Schneideinrichtung 4 angeordnet ist. Zu sehen ist, dass der Positionssensor 5 als erste Kamera ausgebildet ist und mit einem senkrechten Blickwinkel auf den Etikettenstreifen 2a ausgerichtet ist. Das Blickfeld des Positionssensors 5 erfasst dabei eine Länge des Etikettenstreifens 2a, die größer ist als ein einzelnes Etikett 2c. Die Bilder des Positionssensors 5 werden nun über eine Bilddatenleitung 19 an die erste Bildverarbeitungseinheit 12a weitergeleitet und dort ausgewertet. Die erste Bildverarbeitungseinheit 12a ist hier integral in der Maschinensteuerung 6 angeordnet. Alternativ kann diese auch innerhalb des Positionssensors 5 angeordnet sein.

Die erste Bildverarbeitungseinheit 12a ist hier zur Erkennung von charakteristischen Merkmalen des Etikettenaufdrucks auf dem Etikettenstreifen 2a ausgebildet. Hierbei werden beispielsweise die Ränder eines einzelnen Etikettenaufdrucks erkannt und deren Position relativ zum Positionssensor 5 bestimmt. Darüber hinaus ist im Positionssensor 5 dessen Abstand zur Schneideinrichtung 4 gespeichert. Beispielsweise ist dieser Abstand der Weg des Etikettenstreifens 2a in Förderrichtung ab der Bildmitte des Kamerabildes bis zu einer Referenzschneideposition in der Schneideinrichtung 4. Dieser Abstand wird einmalig bei der Inbetriebnahme der Etikettiermaschine 1 kalibriert und zusammen mit der Breite des Kamerabildes in der Ebene des Etikettenstreifens 2a im Positionssensor 5 oder in der Maschinensteuerung 6 als Parameter gespeichert. Folglich kann über diese Parameter der Abstand einer bestimmten Spalte im Kamerabild zu der Referenzschneideposition der Schneideinrichtung 4 berechnet werden. Wie zuvor beschrieben ist bereits die Position des Etikettenrandes durch die erste Bildverarbeitungseinheit 12a erfasst und somit kann unmittelbar die Lage des Etikettenstreifens in Bezug auf die Schneideinrichtung 4 berechnet werden.

Im Lernmodus wird der Etikettenstreifen 2a von der Transporteinrichtung 3 automatisch am Positionssensor 5 vorbeitransportiert und durch die zuvor beschriebene Prozedur wird automatisch die Lage des Etikettenstreifens 2a in Bezug auf die Schneideinrichtung 4 erfasst. Die automatische Steuerung übernimmt dabei die Maschinensteuerung 6 mit der ersten Bildverarbeitungseinheit 12a und dem Steuerungsmodul 14 zur Steuerung der Schneideinrichtung 4.

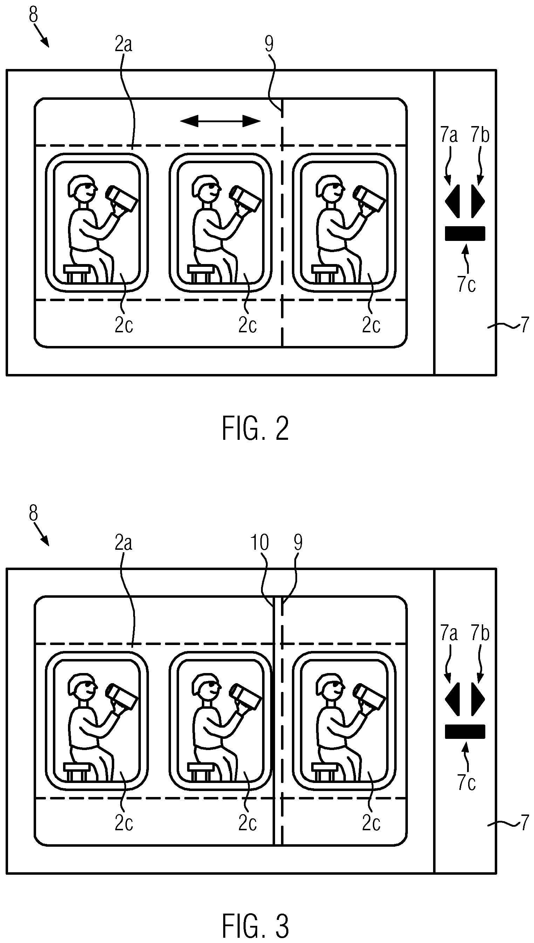

Anschließend wird im Ausrichtungsmodus das Kamerabild des Positionssensors 5 auf dem Bildschirm 8 angezeigt. Auf dem Bildschirm 8 ist das Bild des Etikettenstreifens 2a zu sehen, eine automatisch ermittelte Ist-Schnittvorgabe 10 und die von der Bedienperson gewählte Soll-Schnittvorgabe 9. Diese Soll-Schnittvorgabe 9 kann über die Eingabeeinheit 7 von der Bedienperson eingegeben oder korrigiert werden. Dies wird in den Fig. 2 - 4 weiter unten näher erläutert.

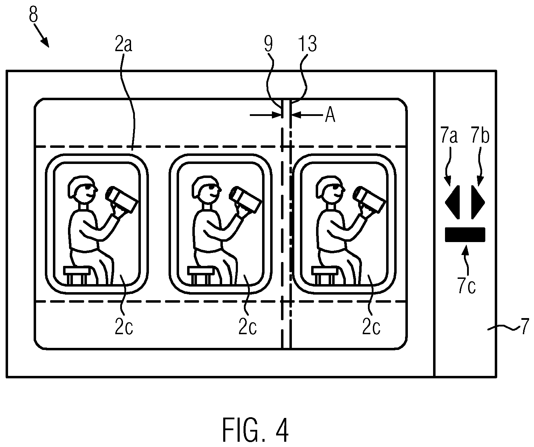

Darüber hinaus ist im Bereich des Auslaufs der Schneideinrichtung 4 die Qualitätssicherungseinheit 16 angeordnet. Diese ist als zweite Kamera ausgebildet und erfasst mit ihrem Blickwinkel den geschnittenen Etikettenstreifen 2b. Das Kamerabild wird über die Bilddatenleitung 21 zu der zweiten Bildverarbeitungseinheit 12b geleitet. Mit der zweiten Bildverarbeitungseinheit 12b wird die Schnittposition im Bild des geschnittenen Etikettenstreifens 2b automatisch ermittelt. Wie in der Fig. 4 ausgeführt, kann hiermit eine Korrektur der Soll-Schnittvorgabe in einem Korrekturmodus erfolgen. Darüber hinaus kann die Bedienperson visuell beurteilen, ob die Schnittposition korrekt gewählt ist.

Anschließend werden die geschnittenen Etiketten 2c auf Behälter aufgebracht (hier nicht gezeigt).

Mit der erfindungsgemäßen Etikettiermaschine 1 ist es auf einfache und schnelle Weise möglich, einen neuen Etikettentypen mit dem Positionssensor 5 einzulernen und die korrekte Lage der Soll-Schnittvorgabe zur Steuerung der Schneideinrichtung 4 vorzugeben. Ebenso ist es möglich, über die Qualitätssicherungseinheit 16 im Korrekturmodus eine Abweichung der Soll-Schnittvorgabe 9 von der tatsächlichen Schnittposition automatisch zu korrigieren. Mit diesen Informationen kann dann auch eine Kalibrierung des Abstands des Positionssensors 5 von der Schneideinrichtung 4 erfolgen.

Darüber hinaus werden die bei dem Verfahren ermittelten Daten (z.B. Soll- und Ist-Schnittvorgabe, Schnittposition und/oder Bilddaten) von der Maschinensteuerung 6 in der Datenbank 15 gespeichert. Dadurch muss ein Etikettentyp nicht erneut eingelernt werden, Kalibrierparameter können gespeichert werden und die Daten können für eine spätere Auswertung herangezogen werden.

Fig. 2 zeigt eine Bildschirmdarstellung des Etikettenstreifens 2a beim Eingeben der Soll-Schnittvorgabe 9 mit der Eingabeeinheit 7.

Auf dem Bildschirm 8 ist das Bild des Etikettenstreifens 2a dargestellt, das mit der ersten Kamera des Positionssensors 5 aus Fig. 1 aufgenommen wurde. Der Etikettenstreifen 2a weist dabei mehrere Etiketten 2c mit den dargestellten Bedruckungen auf. Darüber hinaus ist die Soll-Schnittvorgabe 9 gezeigt. Diese kann entlang des Doppelpfeils mit der Eingabeeinheit 7 über die Pfeiltasten 7a und 7b horizontal verschoben und mit der Taste 7c bestätigt werden.

Im Ausrichtungsmodus wird der Bedienperson folglich die Soll-Schnittvorgabe 9 gegenüber dem Etikettenstreifen 2a angezeigt. Die Bedienperson kann nun die Soll-Schnittvorgabe 9 mit der Eingabeeinheit 7 in die Maschinensteuerung 6 (siehe Fig. 1) eingeben. Hierbei kann die Bedienperson mit den Pfeiltasten 7a und 7b die Soll-Schnittvorgabe 9 entlang des Etikettenstreifens so verschieben, dass diese der gewünschten Schnittposition entspricht.

Anschließend kann die Maschinensteuerung 6 über das Steuerungsmodul 14 die Schneideinrichtung 4 so steuern, dass der Schnitt entsprechend der Soll-Schnittvorgabe 9 erfolgt.

In Fig. 3 zeigt eine Bildschirmdarstellung bei einer automatischen Erkennung der Ist-Schnittvorgabe 10. Diese wird im Lernmodus automatisch von der ersten Bildverarbeitungseinheit 12a aus dem Kamerabild des Positionssensors 5 ermittelt. Beispielsweise ist dies der Rand des Etikettenaufdrucks oder die Mitte zwischen zwei aufeinanderfolgenden Rändern. Hierdurch wird die Bedienperson unterstützt, die Soll-Schnittvorgabe 9 möglichst schnell einzugeben.

Hier ist zu sehen, dass die Ist-Schnittvorgabe 10 etwas zu weit links berechnet wurde und folglich kann die Bedienperson über die Pfeiltasten 7a und 7b die Ist-Schnittvorgabe 10 so verschieben, dass die gewünschte Soll-Schnittvorgabe 9 erreicht wird. Die Ist-Schnittvorgabe 10 und die Soll-Schnittvorgabe 9 können mit unterschiedlichen Farben und/oder Linientypen auf dem Bildschirm 8 dargestellt sein.

Fig. 4 zeigt eine Bildschirmdarstellung nach der Erkennung der Schnittposition 13 durch die Qualitätssicherungseinheit 16. Wie in Bezug auf Fig. 1 beschrieben, erkennt die Qualitätssicherungseinheit 16 automatisch die Schnittposition 13 am geschnittenen Etikettenstreifen 2c. Diese Information wird nun in Bezug auf den noch ungeschnittenen Etikettenstreifen 2a am Bildschirm 8 dargestellt.

Zu sehen ist, dass sich ein Abstand A zwischen der Soll-Schnittvorgabe und der Schnittposition 13 ergibt. Dies ist beispielsweise durch eine fehlerbehaftete Kalibrierung des Abstands des Positionssensors 5 zur Schneideinrichtung 4 zu erklären oder mit einer dejustierten Schneideinrichtung 4.

Im Korrekturmodus kann nun die Maschinensteuerung 6 die Abweichung der Soll-Schnittvorgabe 9 von der Schnittposition 13 berechnen und automatisch korrigieren. Hierüber können auch die entsprechenden Kalibrierparameter in der Maschinensteuerung 6 korrigiert werden. Alternativ kann auch die Bedienperson im Korrekturmodus die Lage der Soll-Schnittvorgabe 9 manuell über die Pfeiltasten 7a und 7b korrigieren und darüber die Abweichung A bestimmen.

Die zuvor genannten Kalibrierungen, Parameter, Kamerabilder, Ist-Schnittvorgaben und Soll-Schnittvorgaben können in der Datenbank 15 gespeichert werden, um die Daten zu einem späteren Zeitpunkt abzurufen und entsprechend auszuwerten.

Es versteht sich, dass in den zuvor beschriebenen Ausführungsbeispielen genannte Merkmale nicht auf diese speziellen Kombinationen beschränkt sind und in beliebigen anderen Kombinationen möglich sind, soweit diese den Umfang der nachstehenden Ansprüche nicht verlassen.

## Patentansprüche

1. Verfahren zum Ausrichten eines Etikettenstreifens (2a) mit einer Vielzahl von Etiketten (2c) gegenüber einer Schneideinrichtung (4), wobei der Etikettenstreifen (2a) durch die Schneideinrichtung (4) in Etiketten (2c) zerschnitten wird, die anschließend auf Behälter aufgebracht werden,
wobei
in einem Lernmodus
der Etikettenstreifen (2a) mit einer Transporteinrichtung (3) automatisch transportiert,
die Lage des Etikettenstreifens (2a) in Bezug auf die Schneideinrichtung (4) mittels eines als erste Kamera ausgebildeten Positionssensors (5) erfasst wird, wobei Kamerabilder des Positionssensors (5) mit einer ersten Bildverarbeitungseinheit (12a) ausgewertet werden, und
wobei die erste Bildverarbeitungseinheit (12a) eine Ist-Schnittvorgabe (10) automatisch erkennt und auf dem Bildschirm (8) gegenüber dem Etikettenstreifen (2a) markiert,
und dann in einem Ausrichtungsmodus
eine Bedienperson eine Soll-Schnittvorgabe (9) mit einer Eingabeeinheit (7) in eine Maschinensteuerung (6) eingeben kann,
wobei dann der Bedienperson auf einem Bildschirm (8) die Soll-Schnittvorgabe (9) gegenüber dem Etikettenstreifen (2a) angezeigt wird, und
wobei dann die Maschinensteuerung (6) auf Basis der Soll-Schnittvorgabe (9) die Schneideinrichtung (4) steuert.

2. Verfahren nach Anspruch 1, wobei die Soll-Schnittvorgabe (9) in einer Datenbank (15) gespeichert wird.

3. Verfahren nach Anspruch 1 oder 2, wobei die Ist-Schnittvorgabe (10) in einer Datenbank (15) gespeichert werden.

4. Verfahren nach wenigstens einem der vorangegangenen Ansprüche, wobei dann in einem Qualitätssicherungsmodus eine als zweite Kamera ausgebildete Qualitätssicherungseinheit (16) den geschnittenen Etikettenstreifen (2b) erfasst.

5. Verfahren nach Anspruch 4, wobei die Qualitätssicherungseinheit (16) eine Schnittposition am geschnittenen Etikettenstreifen (2c) mithilfe einer zweiten Bildverarbeitungseinheit (12b) automatisch erkennt und auf dem Bildschirm (8) gegenüber dem geschnittenen Etikettenstreifen (2b) darstellt.

6. Verfahren nach Anspruch 5, wobei dann in einem Korrekturmodus die Maschinensteuerung (6) eine Abweichung (A) der Soll-Schnittvorgabe (9) von der Schnittposition (13) automatisch korrigiert.

7. Verfahren nach wenigstens einem der vorangegangenen Ansprüche, wobei die Schnittposition (13) in einer Datenbank (15) gespeichert wird.

8. Etikettiermaschine (1) zum Etikettieren von Behältern, umfassend eine Transporteinrichtung (3) zum Transport eines Etikettenstreifens (2a) mit einer Vielzahl von Etiketten (2c), eine Schneideinheit (4) zum Schneiden des Etikettenstreifens (2a), einen als erste Kamera ausgebildeten Positionssensor (5) zur Erfassung der Lage des Etikettenstreifens (2a) in Bezug auf die Schneideinrichtung (4) und eine Maschinensteuerung (6) mit einem Bildschirm (8) und einer Eingabeeinheit (7),
wobei
die Eingabeeinheit (7) zur Eingabe und/oder Korrektur einer Soll-Schnittvorgabe (9) ausgebildet ist,
wobei eine Schnittposition (13) der Schneideinrichtung (4) durch die Maschinensteuerung (6) auf Basis der Soll-Schnittvorgabe (9) steuerbar ist,
**dadurch gekennzeichnet, dass** der Bildschirm (8) zur Anzeige der Soll-Schnittvorgabe (9) gegenüber dem Etikettenstreifen (2a) ausgebildet ist,
dass die Etikettiermaschine (1) weiter eine erste Bildverarbeitungseinheit (12a) zur Auswertung der Lage des Etikettenstreifens (2a) aus einem Kamerabild des Positionssensors (5) umfasst, und
dass die erste Bildverarbeitungseinheit (12a) dazu ausgebildet ist, eine Ist-Schnittvorgabe (10) automatisch zu erkennen und auf dem Bildschirm (8) gegenüber dem Etikettenstreifen (2a) zu markieren.

9. Etikettiermaschine (1) nach Anspruch 8, wobei die erste Bildverarbeitungseinheit (12a) zur Erkennung von transformationsinvarianten Merkmalen der Etikette (2c) ausgebildet ist.

10. Etikettiermaschine (1) nach Anspruch 8 oder 9, wobei die erste Bildverarbeitungseinheit (12a) zum Vergleich des Kamerabildes mit einem Referenzbild ausgebildet ist.

11. Etikettiermaschine (1) nach wenigstens einem der Ansprüche 8 - 10, weiter umfassend eine Qualitätssicherungseinheit (16) zur Erfassung des geschnittenen Etikettenstreifens (2b).

12. Etikettiermaschine (1) nach Anspruch 11, wobei die Qualitätssicherungseinheit (16) eine zweite Kamera umfasst und wobei mit einer zweiten Bildverarbeitungseinheit (12b) eine Schnittposition (13) aus einem Kamerabild des geschnittenen Etikettenstreifens (2b) auswertbar ist.

## Claims

1. Method for aligning a strip of labels (2a) having a plurality of labels (2c) relative to a cutting device (4), wherein the strip of labels (2a) is cut into labels (2c) by the cutting device (4) that are subsequently applied to containers,
wherein
in a learning mode
the strip of labels (2a) is automatically transported by a transport device (3),
the position of the strip of labels (2a) relative to the cutting device (4) is detected by means of a position sensor (5) embodied as a first camera,
wherein the camera images of the position sensor (5) are evaluated with a first image-processing unit (12a), and
wherein the first image-processing unit (12a) automatically detects an actual cutting parameter (10) and marks it on the screen (8) relative to the strip of labels (2a),
and then in an aligning mode,
an operator can enter a desired cutting parameter (9) in a machine control unit (6) by means of an input unit (7),
wherein the desired cutting parameter (9) relative to the strip of labels (2a) is then displayed to the operator on a screen (8), and
wherein the machine control unit (6) controls the cutting device (4) on the basis of the desired cutting parameter (9).

2. Method according to claim 1, wherein the desired cutting parameter (9) is stored in a database (15).

3. Method according to claim 1 or 2, wherein the actual cutting parameter (10) is stored in a database (15).

4. Method according to at least one of the preceding claims, wherein then in a quality assurance mode, a quality assurance unit (16) embodied as a second camera detects the cut strip of labels (2b).

5. Method according to claim 4, wherein the quality assurance unit (16) automatically detects a cutting position at the cut strip of labels (2c) with the aid of a second image-processing unit (12b) and displays it on the screen (8) relative to the cut strip of labels (2b).

6. Method according to claim 5, wherein then in a correction mode, the machine control unit (6) automatically corrects a deviation (A) of the desired cutting parameter (9) from the cutting position (13).

7. Method according to at least one of the preceding claims, wherein the cutting position (13) is stored in a database (15).

8. Labeling machine (1) for labeling containers, comprising a transport device (3) for transporting a strip of labels (2a) with a plurality of labels (2c), a cutting unit (4) for cutting the strip of labels (2a), a position sensor (5) embodied as a first camera for detecting the position of the strip of labels (2a) relative to the cutting device (4), and a machine control unit (6) with a screen (8) and an input unit (7),
wherein
the input unit (7) is embodied to enter and/or correct a desired cutting parameter (9),
wherein a cutting position (13) of the cutting device (4) is controllable by the machine control unit (6) on the basis of the desired cutting parameter (9),
**characterized in that** the screen (8) is embodied to display the desired cutting parameter (9) relative to the strip of labels (2a),
**in that** the labeling machine (1) further comprises a first image-processing unit (12a) for evaluating the position of the strip of labels (2a) from a camera image of the position sensor (5), and
**in that** the first image-processing unit (12a) is configured to automatically detect an actual cutting parameter (10) and to mark it on the screen (8) relative to the strip of labels (2a).

9. Labeling machine (1) according to claim 8, wherein the first image-processing unit (12a) is embodied to detect transformation-invariant features of the labels (2c).

10. Labeling machine (1) according to claim 8 or 9, wherein the first image-processing unit (12a) is embodied to compare the camera image with a reference image.

11. Labeling machine (1) according to at least one of claims 8 - 10, further comprising a quality assurance unit (16) for detecting the cut strip of labels (2b).

12. Labeling machine (1) according to claim 11, wherein the quality assurance unit (16) comprises a second camera and wherein a cutting position (13) may be evaluated from a camera image of the cut strip of labels (2b) with a second image-processing unit (12b).

## Revendications

1. Procédé permettant d'orienter une bande d'étiquettes (2a) munie d'une pluralité d'étiquettes (2c) vis-à-vis d'un dispositif de découpage (4), dans lequel la bande d'étiquettes (2a) est découpée grâce au dispositif de découpage (4) pour fournir des étiquettes (2c) qui sont ensuite apposées sur des contenants,
dans lequel, dans un mode d'apprentissage,
la bande d'étiquettes (2a) est transportée de manière automatique par un dispositif de transport (3),
la position de la bande d'étiquettes (2a) par rapport au dispositif de découpage (4) est détectée au moyen d'un capteur de position (5) réalisé sous la forme d'une première caméra,
dans lequel les images de caméra du capteur de position (5) sont évaluées par une première unité de traitement d'image (12a), et
dans lequel la première unité de traitement d'image (12a) identifie de manière automatique une directive de découpe effective (10) et la place sur l'écran (8) vis-à-vis de la bande d'étiquettes (2a),
puis, dans un mode d'orientation,
un opérateur peut entrer une directive de découpe théorique (9) dans une commande de machine (6) grâce à une unité d'entrée (7),
dans lequel la directive de découpe théorique (9) est ensuite indiquée à l'opérateur sur un écran (8) vis-à-vis à la bande d'étiquettes (2a), et
dans lequel la commande de machine (6) commande ensuite le dispositif de découpage (4) en se basant sur la directive de découpe théorique (9).

2. Procédé selon la revendication 1, dans lequel la directive de découpe théorique (9) est mémorisée dans une base de données (15).

3. Procédé selon la revendication 1 ou 2, dans lequel la directive de découpe effective (10) est mémorisée dans une base de données (15).

4. Procédé selon au moins l'une des revendications précédentes, dans lequel, dans un mode d'assurance qualité, une unité d'assurance qualité (16) réalisée sous la forme d'une seconde caméra détecte ensuite la bande d'étiquettes (2b) découpées.

5. Procédé selon la revendication 4, dans lequel l'unité d'assurance qualité (16) identifie de manière automatique, au moyen d'une seconde unité de traitement d'image (12b), une position de découpe sur la bande d'étiquettes (2c) découpée et la représente sur l'écran (8) vis-à-vis de la bande d'étiquettes (2b) découpée.

6. Procédé selon la revendication 5, dans lequel, dans un mode de correction, la commande de machine (6) corrige ensuite de manière automatique un écart (A) de la directive de découpe théorique (9) par rapport à la position de découpe (13).

7. Procédé selon au moins l'une des revendications précédentes, dans lequel la position de découpe (13) est mémorisée dans une base de données (15).

8. Machine d'étiquetage (1) permettant d'étiqueter des contenants, comprenant un dispositif de transport (3) permettant de transporter une bande d'étiquettes (2a) munie d'une pluralité d'étiquettes (2c), une unité de découpage (4) permettant de découper la bande d'étiquettes (2a), un capteur de position (5) réalisé sous la forme d'une première caméra et permettant de détecter la position de la bande d'étiquettes (2a) par rapport au dispositif de découpage (4) et une commande de machine (6) munie d'un écran (8) et d'une unité d'entrée (7),
dans lequel l'unité d'entrée (7) est conçue pour l'entrée et/ou la correction d'une directive de découpe théorique (9),
dans lequel une position de découpe (13) du dispositif de découpage (4) peut être commandée grâce à la commande de machine (6) en se basant sur la directive de découpe théorique (9),
**caractérisée en ce que** l'écran (8) est conçu pour indiquer la directive de découpe théorique (9) vis-à-vis de la bande d'étiquettes (2a),
**en ce que** la machine d'étiquetage (1) comprend en outre une première unité de traitement d'image (12a) permettant d'évaluer la position de la bande d'étiquettes (2a) à partir d'une image de caméra du capteur de position (5), et
**en ce que** la première unité de traitement d'image (12a) est conçue pour identifier de manière automatique une directive de découpe effective (10) et pour la placer sur l'écran (8) vis-à-vis de la bande d'étiquettes (2a).

9. Machine d'étiquetage (1) selon la revendication 8, dans laquelle la première unité de traitement d'image (12a) est conçue pour identifier des caractéristiques invariantes de transformation des étiquettes (2c).

10. Machine d'étiquetage (1) selon la revendication 1, dans laquelle la première unité de traitement d'image (12a) est conçue pour comparer l'image de caméra à une image de référence.

11. Machine d'étiquetage (1) selon au moins l'une des revendications 8 à 10, comprenant en outre une unité d'assurance qualité (16) permettant de détecter la bande d'étiquettes (2b) découpée.

12. Machine d'étiquetage (1) selon la revendication 11, dans laquelle l'unité d'assurance qualité (16) comprend une seconde caméra et dans laquelle une position de découpe (13) issue d'une image de caméra de la bande d'étiquettes (2b) peut être évaluée par une seconde unité de traitement d'image (12b).
